(19) Europäisches Patentamt
European Patent Office
Office européen des brevets

(11) EP 2 440 885 B1

(12) **EUROPÄISCHE PATENTSCHRIFT**

(45) Veröffentlichungstag und Bekanntmachung des Hinweises auf die Patenterteilung:
**31.07.2019   Patentblatt 2019/31**

(51) Int Cl.:
**G01F 1/58** *(2006.01)*      *G01F 15/06* *(2006.01)*
*G01F 15/14* *(2006.01)*

(21) Anmeldenummer: **10730067.5**

(22) Anmeldetag: **11.06.2010**

(86) Internationale Anmeldenummer:
**PCT/EP2010/003502**

(87) Internationale Veröffentlichungsnummer:
**WO 2010/142450 (16.12.2010 Gazette 2010/50)**

(54) **MAGNETISCH-INDUKTIVER DURCHFLUSSMESSER**

ELECTROMAGNETIC FLOWMETER

DÉBITMÉTRE ÉLECTROMAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **12.06.2009   US 457483**
**19.12.2009   DE 202009017274 U**
**19.12.2009   DE 202009017275 U**

(43) Veröffentlichungstag der Anmeldung:
**18.04.2012   Patentblatt 2012/16**

(73) Patentinhaber: **Sensus Spectrum LLC**
**Raleigh, NC 27615 (US)**

(72) Erfinder:
• **GÖGGE, Jörn**
**55234 Oberflörsheim (DE)**

• **ZIMMERMAN, Michael**
**15411 Addison (US)**
• **PSTIR, Raymond**
**15642 Irwin (US)**

(74) Vertreter: **Schwertfeger, Astrid**
**Patentanwälte**
**Dr. Keller, Schwertfeger**
**Westring 17**
**76829 Landau (DE)**

(56) Entgegenhaltungen:
**DE-A1-102006 060 443      DE-A1-102007 004 826**
**DE-A1-102007 005 670      GB-A- 1 145 461**
**US-A- 5 280 727**

**Beschreibung**

Technisches Gebiet:

Die Erfindung betrifft magnetisch-induktive Durchflussmesser gemäß dem Oberbegriff des Anspruchs 1.

Stand der Technik:

Magnetisch-induktive Durchflussmesser verwenden eine Messmethode, die auf dem Faraday'schen Gesetz der elektromagnetischen Induktion beruht. Die erste Grundlage zur magnetisch-induktiven Messung der Strömungsgeschwindigkeit von Fluiden wurde im Jahr 1832 in einer Veröffentlichung von Michael Faraday festgehalten. Die moderne elektronische Schaltungstechnik in Verbindung mit magnetischen Wechselfeldern machte es möglich, die Trennung der zur Strömungsgeschwindigkeit proportionalen Nutzsignale von Störsignalen, die auf elektro-chemische Vorgänge beim Erzeugen des Magnetfeldes an den zur Signalauskopplung benutzten Elektroden auftreten, zu bewältigen. Somit schien dem weit verbreiteten industriellen Einsatz magnetisch-induktiver Durchflussmesser nichts mehr im Wege zu stehen.

Das Messprinzip der magnetisch-induktiven Durchflussmesser nutzt die Trennung bewegter Ladungen in einem Magnetfeld aus. Durch ein Rohr aus nichtmagnetischem Werkstoff, dessen Innenseite elektrisch isolierend ist, strömt die zu messende leitfähige Flüssigkeit. Von außen wird mittels Spulen ein Magnetfeld aufgebracht. Die in der leitfähigen Flüssigkeit vorhandenen Ladungsträger, Ionen und andere geladene Teilchen, werden durch das Magnetfeld abgelenkt: die positiven Ladungsträger zur einen Seite, die negativen Ladungsträger zur anderen Seite. An senkrecht zum Magnetfeld angeordneten Messelektroden entsteht durch die Ladungstrennung eine Spannung, die mit einem Messgerät erfasst wird. Die Höhe der gemessenen Spannung ist proportional der Strömungsgeschwindigkeit der Ladungsträger und damit proportional zur Fließgeschwindigkeit des Messfluids. Mittels Integration über die Zeit lässt sich die Durchflussmenge ermitteln.

Bei Magnetfeldern, die mit reiner Wechselspannung erzeugt werden, kommt es zur Induktion von Störspannungen in den Elektroden, die durch geeignete und aufwändige Filter unterdrückt werden müssen. Daher wird das Magnetfeld üblicherweise durch einen getakteten Gleichstrom wechselnder Polarität erzeugt. Dies gewährleistet einen stabilen Nullpunkt und macht die Messung unempfindlich gegenüber Einflüssen durch Mehrphasenstoffe und Inhomogenitäten in der Flüssigkeit. Auch bei geringer Leitfähigkeit ist so ein brauchbares Messsignal erreichbar.

Wird eine Messflüssigkeit durch das Messrohr bewegt, liegt gemäß dem Induktionsgesetz an den beiden Messelektroden, die in dem Messrohr senkrecht zur Fließrichtung und senkrecht zum Magnetfeld angeordnet sind, eine Spannung an. Diese Spannung ist bei einem symmetrischen Strömungsprofil und einem homogenen Magnetfeld direkt proportional zur mittleren Strömungsgeschwindigkeit. Das induktive Durchflussmessverfahren ist in der Lage, direkt aus dem Durchfluss ein elektrisch nutzbares Signal zur Weiterverarbeitung zu erzeugen. Es gilt grundsätzlich die Gleichung:

$$U = k * B * D * v$$

mit U = Spannung, k = Proportionalitätsfaktor, B = Magnetfeldstärke, D = Rohrdurchmesser, v = Strömungsgeschwindigkeit.

Die Auswahl des richtigen Elektrodenmaterials ist entscheidend für die zuverlässige Funktion und Messgenauigkeit der magnetisch-induktiven Durchflussmesser. Die Messelektroden stehen im direkten Kontakt mit dem Medium und müssen somit ausreichend korrosionsbeständig sein und einen guten elektrischen Übergang zum Messfluid gewährleisten. Als Elektrodenmaterialien kommen zum Einsatz: Edelstähle, CrNi-Legierungen, Platin, Tantal, Titan und Zirkonium. Bei Messwertaufnehmem mit Keramik-Messrohren werden auch eingesinterte Elektroden verwendet.

Aus der EP 1616152 B1 sind verbesserte Elektroden bekannt. Diese Elektroden bestehen aus einem Metall und einem Salz dieses Metalls, das so angeordnet ist, dass es sich zwischen dem Metall und dem Fluid befindet, wobei die Salzschicht entweder elektrochemisch aufgetragen oder aufgesintert wird. Als Metall wird Silber, als Salz Silberchlorid oder Silberfluorid bevorzugt. Als Schutz gegen Verschmutzung kann vor der Silberelektrode ein poröses Schutzelement, beispielsweise eine Glasfritte, montiert werden.

Eine mögliche Realisierung eines magnetisch-induktiven Durchflussmessers ist in der US 6,626,048 B1 offenbart.

Allerdings zeigt diese Schrift nur die physikalischen und elektronischen Grundlagen, keine praktische Realisierung, Der Oberbegriff des Anspruchs 1 ist aus der DE 10 2007 004826 A1 bekannt.

Es versteht sich, dass bei der praktischen Realisierung eines magnetisch-induktiven Durchflussmessers erhebliche Probleme zu lösen sind.

Da ist zum einen die Frage des Materials. Das Messrohr muss amagnetisch sein, um die Magnetfelder nicht zu stören. Das Messrohr muss des Weiteren elektrisch isolierend sein, um die Abnahme der Spannung mit Hilfe der Elektroden nicht zu stören. Darüber hinaus muss das Rohr aus lebensmittelechtem Material bestehen, wenn das Fluid ein Lebensmittel ist, beispielsweise Trinkwasser.

Diese Anforderungen lassen sich am besten erfüllen, wenn als Material ein lebensmittelechter Kunststoff verwendet wird. Allerdings haben Kunststoffe gegenüber Metall den Nachteil der wesentlich geringeren Festigkeit. Festigkeit gegenüber dem Innendruck ist jedoch zwingende Voraussetzung. Der Versuch, die Innendruckfestigkeit durch eine vergrößerte Dicke der Rohrwand zu erreichen, ist nicht gangbar, da anderenfalls das Magnetfeld zu sehr geschwächt würde.

Ein weiteres Problem bei Kunststoffen ist die Wasserdiffusion. Diese bewirkt ein Quellen des Kunststoffs, wodurch sich die Abmessungen insbesondere des Messkanals verändern, was zu einer Verschlechterung der Messgenauigkeit führt. Wasserdiffusion verringert auch die Festigkeit des Kunststoffs erheblich. Bei faserverstärkten Kunststoffen geht auch die Haftung zwischen Kunststoff und Faser teilweise verloren.

Bei der Messung von warmen und heißen Fluiden wird der Kunststoff erweicht, die Festigkeit verringert sich ebenfalls

Chemikalien, z. B. Chlor, im Messfluid können den Kunststoff ebenfalls angreifen. Gleiches gilt für UV-Strahlung.

Des Weiteren muss das Zählergehäuse zugfest sein, da beim Einschrauben eines Zählers in eine bestehende Verrohrung erhebliche Zugspannungen auftreten können, z. B. in den Schraubgewinden. Zugspannungen, insbesondere Dauerzugspannungen, sind für Kunststoffe jedoch schädlich, und zwar insbesondere, je dünner das Kunststoffmaterial ist.

Bei der Montage vor Ort können weitere Kräfte auf den Kunststoff einwirken, die zu Schäden führen, wenn Konstrukteure und Hersteller nicht vorgesorgt haben.

Darstellung der Erfindung:

Der vorliegenden Erfindung liegt die Aufgabe zugrunde, einen magnetisch-induktiven Durchflussmesser anzugeben, der die vorstehend genannten Probleme meistert und dessen Kunststoffgehäuse sowohl gegen den vom Messfluid ausgehenden Innendruck als auch gegenüber Zugspannungen sowie gegen weitere thermische und mechanische Belastungen beständig ist.

Diese Aufgabe wird gelöst durch magnetisch-induktive Durchflussmesser mit den Merkmalen des Patentanspruchs 1.

Dank der erfindungsgemäßen Merkmale können die geschilderten gegenläufigen Bedingungen optimal erfüllt werden. Im Bereich der Magnetfeldlinien ist die Wand des Messkanals optimal dünn, so dass ein homogenes Magnetfeld optimaler Stärke erreicht wird. Der Innendruck des Messfluids wird durch den inneren Verstärkungskäfig, bestehend aus zwei inneren Querschotten und wenigstens zwei inneren Längsrippen, aufgefangen.

Der innere Verstärkungskäfig wird zusätzlich gestützt durch einen äußeren Verstärkungskäfig, bestehend aus wenigstens zwei ersten äußeren Längsrippen. Hauptaufgabe des äußeren Verstärkungskäfigs ist es jedoch, den Messabschnitt des Gehäuses und insbesondere den Bereich mit minimaler Wandstärke vor Zugspannungen zu schützen, die von den Stutzen ausgehen.

Ein weiterer Vorteil dieser Form ist, dass das Gehäuse im Spritzgussverfahren hergestellt werden kann.

Vorteilhafterweise besitzt der Messkanal einen rechteckigen Querschnitt. Auf diese Weise lässt sich optimal ein homogenes Magnetfeld realisieren.

Gemäß einer Ausgestaltung der Erfindung besitzen die inneren Längsrippen im Bereich der reduzierten Kanalwand Aussparungen für die Montage der Magnetpole.

Zusätzlich können die inneren Längsrippen bereichsweise weitere Aussparungen für die Montage weiterer Bauteile oder für die Verankerung von Materialien zum Schutz der Messelektronik besitzen.

Zum Erreichen einer hohen Druckfestigkeit werden die inneren Querschotten bevorzugt direkt vor und hinter der reduzierten Kanalwand positioniert.

Gemäß einer Weiterbildung der Erfindung und zur Verstärkung des Gehäuses umfasst der äußere Verstärkungskäfig zusätzlich wenigstens zwei zu den ersten äußeren Längsrippen senkrecht orientierte zweite äußere Längsrippen.

Zur weiteren Versteifung in Querrichtung können auch wenigstens zwei äußere Querschotten vorgesehen sein.

Zur optimalen Übertragung der Zugkräfte von dem äußeren Verstärkungskäfig auf die Stutzen empfehlen sich keilförmige Verstärkungsrippen, die den Kraftfluss in Einlaufstutzen und Auslaufstutzen einleiten.

Eine optimale Konstruktion ist dann gegeben, wenn die relative Längendehnung des durch inneren und äußeren Verstärkungskäfig verstärkten Messabschnitts, ausgelöst durch Zug an Einlaufstutzen und Auslaufstutzen, nicht größer ist als die relative Längendehnung der Stutzen selbst. Auf diese Weise wird verhindert, dass einzelne Teile des Gehäuses überdehnt werden können.

Gemäß einer Weiterbildung der Erfindung ist der Messabschnitt einschließlich der Magnetpole und Elektroden mit einer isolierenden Schicht umhüllt. Dies kann beispielsweise durch Umgießen erfolgen, wobei das Material auch in die oben erwähnten Aussparungen eindringt.

Vorteilhafterweise umschließt eine elektrische und/oder magnetische Abschirmung den kompletten Messabschnitt. Dabei kann die Abschirmung mit den Stutzen oder den äußeren Querschotten mechanisch verbunden sein. Auf diese Weise kann die Abschirmung die Funktion des äußeren Verstärkungskäfigs ergänzen.

Vorteilhafterweise besteht das Gehäuse aus geeignet verstärktem Kunststoff, insbesondere faserverstärktem thermoplastischem Kunststoff.

Gemäß einer Variante der Erfindung besteht das Gehäuse aus zwei separat hergestellten Einzelteilen, dem eigentlichen druckfesten Gehäuse und einem externen Messmodul. Das Gehäuse besitzt eine Aussparung für das separate, vorzugsweise liftartig einsetzbare Modul. Das Modul umfasst wenigstens die inneren Querschotten, den Messkanal, die Elektroden und die Magnetpole.

Gemäß einer weiteren Variante der Erfindung besteht das Gehäuse aus drei separat hergestellten, zugfest miteinander verbundenen Einzelteilen. Einlass- und Auslassstutzen sind identisch geformt. Auf diese Weise kann die Herstellung der Kunststoffteile rationalisiert werden. Die Enden der Messeinheit sind mittels Dichtungen fluiddicht in Aussparungen in den Stutzen eingedichtet.

Die Magnetpole können nicht nur außen an der Kanalwand anliegen sondern auch in die Kanalwand integriert sein.

Kurze Beschreibung der Zeichnungen:

Anhand der Zeichnung soll die Erfindung in Form eines Ausführungsbeispiels erläutert werden. Es zeigen jeweils nicht maßstabgetreu

Fig. 1    eine Draufsicht auf ein halbseitig aufgeschnittenes druckfestes, einteiliges Kunststoffgehäuse für einen magnetisch-induktiven Durchflussmesser,

Fig. 2    einen Querschnitt durch das Gehäuse der Fig. 1 entlang der Linie II - II,

Fig. 3    ein zweiteiliges Gehäuse als Sprengbild und

Fig. 4    als Teilschnitt ein dreiteiliges Gehäuse, ebenfalls als Sprengbild.

Wege zur Ausführung der Erfindung und gewerbliche Verwertbarkeit::

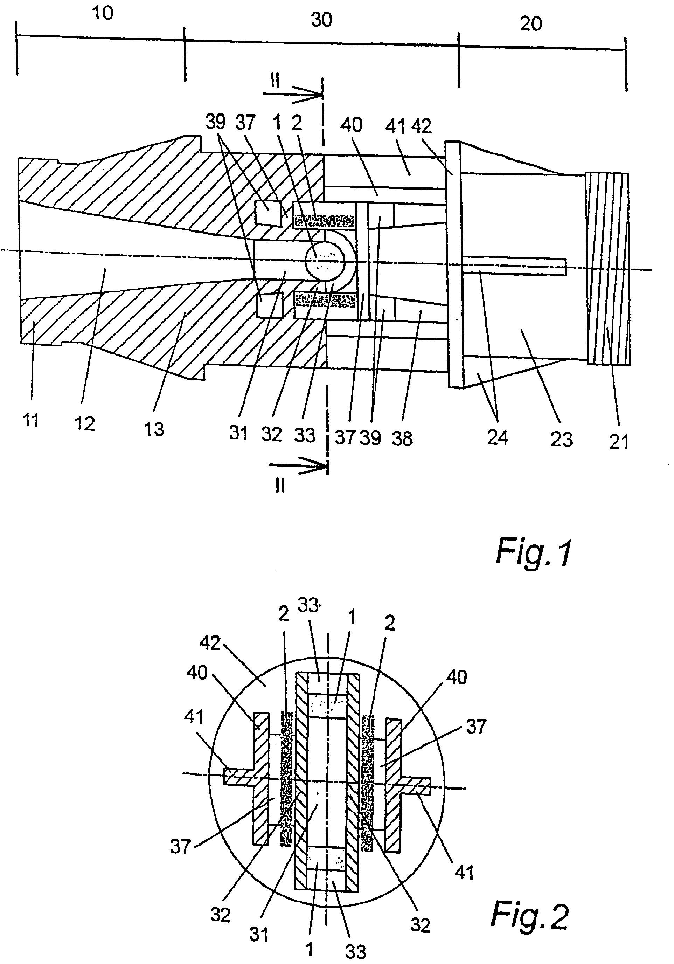

Fig. 1 zeigt rein schematisch und nicht maßstabgetreu eine Draufsicht auf ein halbseitig längs geschnittenes, druckfestes, einteiliges Kunststoffgehäuse für einen magnetisch-induktiven Durchflussmesser. Man erkennt drei Funktionseinheiten: einen Einlaufstutzen 10, einen Auslaufstutzen 20 und dazwischen einen Messabschnitt 30 mit einem vom Messfluid durchströmten Messkanal 31 mit einer Kanalwand 32, zwei sich gegenüberliegenden Magnetpolen 2 außen an der Kanalwand 32 und zwei sich gegenüberliegenden, senkrecht zu den Magnetpolen 2 orientierten Messelektroden 1 in der Kanalwand 32. Die Dicke der Kanalwand 32 ist im Bereich der Magnetpole 2 auf ein unter Berücksichtigung des maximalen Innendrucks des Messfluids in dem Messkanal 31 zulässiges Maß reduziert, so dass ein von den Magnetpolen 2 erzeugtes homogenes Magnetfeld im Bereich des Messkanals 31 ausreichend stark ist.

Um den Fluidinnendruck aufzufangen, ist ein innerer Verstärkungskäfig vorgesehen, bestehend aus wenigstens zwei inneren Querschotten 37 und wenigstens zwei inneren Längsrippen 38. Die inneren Querschotten 37 befinden sich unmittelbar vor und hinter der Kanalwand 32 minimaler Stärke, um Verformungen der Kanalwand 32 aufzufangen. Die gleiche Aufgabe haben die inneren Längsrippen 38, die die langen Kanalwände 32 versteifen, jedoch wenigstens im Bereich der Magnetpole 2 ausgeschnitten sein müssen.

Für die Montage etwaiger weiterer Bauteile oder zur Verankerung isolierender Vergussmassen können die inneren Längsrippen 38 bereichsweise weitere Aussparungen 39 besitzen.

Zusätzlich zu dem inneren Verstärkungskäfig ist ein äußerer Verstärkungskäfig vorgesehen, bestehend aus zwei ersten äußeren Längsrippen 40, zwei dazu senkrecht orientierten zweiten äußeren Längsrippen 41 und zwei äußeren Querschotten 42. Der äußere Verstärkungskäfig und insbesondere die ersten äußeren Längsrippen 40 stützen den inneren Verstärkungskäfig zusätzlich gegen den Fluidinnendruck ab.

Hauptaufgabe des äußeren Verstärkungskäfigs ist es jedoch, die Zugspannungen aufzufangen, die bei der Ausübung von Zugkräften auf Einlass- und Auslassstutzen 10, 20 entstehen. Ohne inneren und äußeren Verstärkungskäfig würden diese Zugspannungen das Gehäuse im Bereich der reduzierten Kanalwand 32 zerstören. Dies wird durch den äußeren Verstärkungskäfig verhindert.

Eine optimale Übertragung der Zugspannungen von dem äußeren Käfig und insbesondere dessen Querschotten 42 auf Einlass- und Auslassstutzen 10, 20 wird durch keilförmige Verstärkungsrippen 14, 24 erreicht.

Fig. 2 zeigt einen Querschnitt entlang der Linie II - II durch das Gehäuse der Fig. 1. Man erkennt den rechteckigen Messkanal 31, rechts und links begrenzt von der reduzierten Kanalwand 32, an deren Außenseite die Magnetpole 2 anliegen. Vom inneren Verstärkungskäfig ist ein Querschott 37 sichtbar, vom äußeren Verstärkungskäfig erkennt man die ersten und zweiten äußeren Längsrippen 40, 41 im Schnitt und ein äußeres Querschott 42.

Schließlich erkennt man in der Fig. 2 auch die Messelektroden 1, die senkrecht zu den Magnetpolen 2 orientiert sind. Die Messelektroden 1 sind durch einen Gehäusekragen 33 gehalten und geschützt.

Die in den Figuren 1 und 2 dargestellte einteilige Ausführung ist nicht die einzig mögliche.

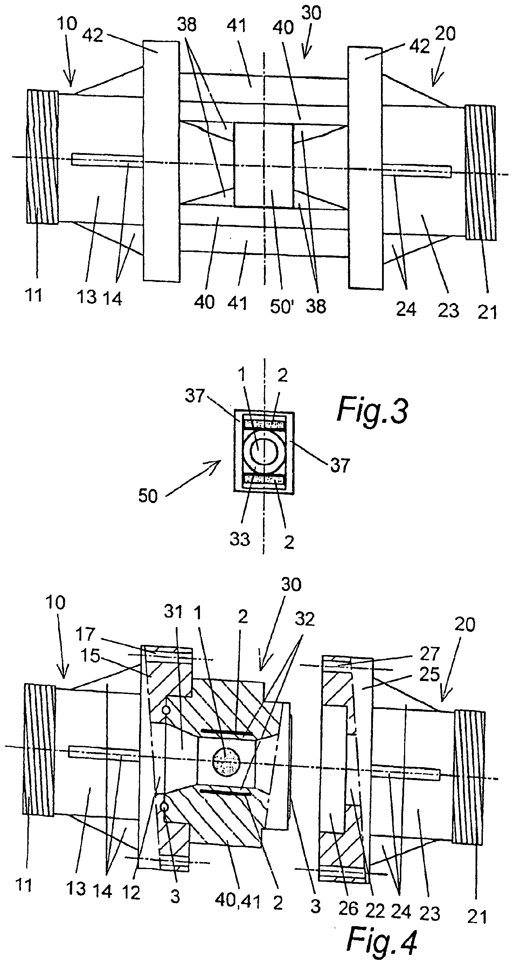

Fig. 3 zeigt eine zweiteilige Ausführung. Einlassstutzen 10, Auslassstutzen 20, äußerer Verstärkungskäfig 40, 41, 42 und die ersten inneren Längsrippen 38 des inneren Verstärkungskäfigs bilden eine Einheit. Im Zentrum des Gehäuses befindet sich eine Aussparung 50'. In diese wird die als eigenständiges Modul 50 ausgebildete Messkammer mit den Elektroden 1, den Magnetpolen 2 und den inneren Querschotten 37 liftartig eingesetzt und eingedichtet.

Fig. 4 zeigt teilweise geschnitten eine dreiteilige Ausführung. Einlassstutzen 10 und Auslassstutzen 20 sind identisch geformt. Ihre verstärkten Flansche 15, 25 besitzen je eine Aussparung 16, 26, in die der Messabschnitt 30 mit Hilfe von Dichtungen 3 eingesetzt wird.

Bohrungen 17, 27 ermöglichen die Verwendung von Zugschrauben zur zugfesten Verbindung der drei Gehäuseteile 10, 20, 30.

Im Beispiel der Fig. 4 sind die Magnetpole 2 nicht erfindungsgemäß in die Wand des Messkanals eingegossen.

Dadurch ist es möglich, die Magnetpole 2 extrem nahe an den Messkanal anzunähern. Die inneren und äußeren Längsrippen sind an der Messeinheit 30 angeformt, die verstärkten Flansche 15, 25 übernehmen auch die Funktion der äußeren Querschotten.

**Patentansprüche**

1. Magnetisch-induktiver Durchflussmesser, mit einem druckfesten Gehäuse aus Kunststoff, umfassend

   - einen Einlaufstutzen (10),
   - einen Auslaufstutzen (20),
   - und dazwischen eine Messeinheit (30) mit

      -- einem vom Messfluid durchströmten Messkanal (31) mit einer Kanalwand (32),
      -- zwei sich gegenüber liegenden Magnetpolen (2) am Messkanal (31),
      -- und zwei sich gegenüber liegenden, senkrecht zu den Magnetpolen (2) orientierten Messelektroden (1) in der Kanalwand (32),

   - wobei unter Berücksichtigung des für den gewählten Kunststoff maximal zulässigen Innendrucks die Kanalwand (32) im Bereich der Magnetpole (2) auf ein noch zulässiges Maß reduziert ist,

   **gekennzeichnet durch** die Merkmale:

      - ein innerer Verstärkungskäfig, bestehend aus wenigstens zwei inneren Querschotten (37) und wenigstens zwei inneren Längsrippen (38), stabilisiert die Kanalwand (32),
      - ein äußerer Verstärkungskäfig, bestehend aus wenigstens zwei ersten äußeren Längsrippen (40), hält und stabilisiert den inneren Verstärkungskäfig und verbindet die Messeinheit (30) zugfest mit Einlaufstutzen (10) und Auslaufstutzen (20).

2. Durchflussmesser nach Anspruch 1, **gekennzeichnet durch** das Merkmal:

      - der Messkanal (31) besitzt einen rechteckigen Querschnitt.

3. Durchflussmesser nach Anspruch 1 oder 2, **gekennzeichnet durch** das Merkmal:

      - die inneren Längsrippen (38) besitzen im Bereich der reduzierten Kanalwand (32) Aussparungen für die Montage der Magnetpole (2).

4. Durchflussmesser nach Anspruch 1, 2 oder 3, **gekennzeichnet durch** das Merkmal:

      - die inneren Längsrippen (38) besitzen bereichsweise weitere Aussparungen (39) für die Montage weiterer Bauteile und/oder zur Verankerung isolierender Vergussmassen.

5. Durchflussmesser nach einem der Ansprüche 1 bis 4, **gekennzeichnet durch** das Merkmal:

      - die inneren Querschotten (37) sind direkt vor und hinter der reduzierten Kanalwand (32) positioniert.

6. Durchflussmesser nach einem der Ansprüche 1 bis 5, **gekennzeichnet durch** das Merkmal:

      - der äußere Verstärkungskäfig umfasst auch wenigstens zwei äußere Querschotten (42).

7. Durchflussmesser nach einem der Ansprüche 1 bis 6, **gekennzeichnet durch** das Merkmal:

      - der äußere Verstärkungskäfig umfasst auch wenigstens zwei zu den ersten äußeren Längsrippen (40) senkrecht orientierte zweite äußere Längsrippen (41).

8. Durchflussmesser nach einem der Ansprüche 1 bis 7, **gekennzeichnet durch** das Merkmal:

      - keilförmige Verstärkungsrippen (14, 24) leiten den Kraftfluss der ersten und/oder zweiten äußeren Längsrippen (40, 41) in Einlaufstutzen (10) und Auslaufstutzen (20) ein.

9. Durchflussmesser nach einem der Ansprüche 1 bis 8, **gekennzeichnet durch** das Merkmal:

      - die relative Längendehnung der durch inneren und äußeren Verstärkungskäfig verstärkten Messeinheit (30), ausgelöst durch Zug an Einlaufstutzen (10) und Auslaufstutzen (20), ist nicht größer als die relative Längendehnung der Stutzen (10, 20) selbst.

10. Durchflussmesser nach einem der Ansprüche 1 bis 9, **gekennzeichnet durch** das Merkmal:

      - die Messeinheit (30) ist mit einer Beschichtung außen umhüllt.

11. Durchflussmesser nach einem der Ansprüche 1 bis 10, **gekennzeichnet durch** das Merkmal:

- eine elektrische und/oder magnetische Abschirmung umschließt die Messeinheit (30).
- die Abschirmung ist mit den Stutzen (10, 20) oder den äußeren Querschotten (42) mechanisch verbunden.

12. Durchflussmesser nach einem der Ansprüche 1 bis 11, **gekennzeichnet durch** das Merkmal:

- Die Magnetpole (2) sind in die Kanalwand (32) integriert.

13. Durchflussmesser nach einem der Ansprüche 1 bis 12, **gekennzeichnet durch** das Merkmal:

- das Gehäuse besteht aus verstärktem Kunststoff, vorzugsweise faserverstärktem thermoplastischem Kunststoff.

14. Durchflussmesser nach einem der Ansprüche 1 bis 13, **gekennzeichnet durch** das Merkmal:

- das Gehäuse besteht aus zwei separat hergestellten Einzelteilen (10, 20, 30; 50),
- die Messeinheit (30) besitzt eine Aussparung (50') für ein separates, vorzugsweise liftartig einsetzbares Modul (50),
- das Modul (50) umfasst wenigstens die inneren Querschotten (37), den Messkanal, die Elektroden (1) und die Magnetpole (2).

15. Durchflussmesser nach einem der Ansprüche 1 bis 13, **gekennzeichnet durch** das Merkmal:

- das Gehäuse besteht aus drei separat hergestellten, zugfest miteinander verbundenen Einzelteilen (10, 20, 30),
- die Enden der Messeinheit (30) sind mittels Dichtungen (3) fluiddicht in Aussparungen (16, 26) in den Stutzen (10, 20) eingedichtet.

**Claims**

1. A magnetic inductive flow meter having a pressure-resistant plastic housing, the flow meter comprising:

an inlet connecting piece (10);
an outlet connecting piece (20); and
a measuring unit (30) arranged between the inlet connecting piece (10) and the outlet connecting piece (20), the measuring unit (30) comprising:

a measuring channel (31) with a channel wall (32), the measuring channel configures such that the measuring fluid flows there through;
two opposing magnetic poles (2) at the measuring channel (31); and
two opposing measuring electrodes (1) oriented perpendicular to the magnetic poles (2) in the channel wall (32),
wherein, with consideration of the maximum permissible internal pressure for the selected plastic, the channel wall (32) is reduced to a still permissible extent in the area of the magnetic poles (2), **characterized by** the features:

- an inner reinforcement cage, having at least two inner transverse partitions (37) and at least two inner longitudinal ribs (38), stabilizes the channel wall (32),
- an outer reinforcement cage, having at least two first outer longitudinal ribs (40), holds and stabilizes the inner reinforcement cage and connects the measuring unit (30) in a tension-resistant manner to the inlet connecting piece (10) and the outlet connecting piece (20).

2. The flow meter according to claim 1, wherein the measuring channel (31) has a rectangular cross section.

3. The flow meter according to claim 1 or 2, wherein the inner longitudinal ribs (38) have recesses in the area of the reduced channel wall (32) for mounting the magnetic poles (2).

4. The flow meter according to claim 1, 2 or 3, wherein the inner longitudinal ribs (38) have, in areas, additional recesses (39) adapted for mounting additional structural parts and/or for anchoring insulating sealing compound.

5. The flow meter according to claim 1 to 4, wherein the inner transverse partitions (37) are positioned directly before and behind the reduced channel wall (32).

6. The flow meter according to claim 1 to 5, wherein the outer reinforcement cage further comprises at least two outer transverse partitions (42).

7. The flow meter according to claim 1 to 6, wherein the outer reinforcement cage further comprises at least two second outer longitudinal ribs (40) oriented perpendicular to the first outer longitudinal ribs (41).

8. The flow meter according to claim 1 to 7, wherein wedge-shaped reinforcement ribs (14, 24) pass the magnetic flux of the first and/or second outer longitudinal ribs (40, 41) to the inlet connecting piece (10) and the outlet connecting piece (20).

9. The flow meter according to claim 1 to 8, wherein a relative linear expansion of the measuring unit (30) reinforced by the inner and outer reinforcement cage, said expansion which is caused by tension at the inlet connecting piece (10) and outlet connecting piece (20), is not greater than the relative linear expansion of the connecting pieces (10, 20) themselves.

10. The flow meter according to claim 1 to 9, wherein the measuring unit (30) is enclosed on an outside with a covering.

11. The flow meter according to claim 1 to 10, wherein an electrical and/or magnetic shielding surrounds the measuring unit (30), and wherein the shielding is mechanically connected to the connecting pieces (10, 20) or the outer transverse partitions (42).

12. The flow meter according to claim 1 to 11, wherein the magnetic poles (2) are integrated into the channel wall (32).

13. The flow meter according to claim 1 to 12, wherein the housing is formed of reinforced plastic, preferably fiber-reinforced thermoplastic.

14. The flow meter according to claim 1 to 13, wherein the housing is formed of two separately produced individual parts (10, 20, 30; 50), wherein the measuring unit (30) has a recess (50') for a separate module (50) that is insertable by raising/lowering, and wherein the module (50) comprises at least the inner transverse partitions (37), the measuring channel, the electrodes (1), and the magnetic poles (2).

15. The flow meter according to claim 1 to 13, wherein the housing is formed of three separately produced individual parts (10, 20, 30) connected to one another in a tension-resistant manner, and wherein the ends of the measuring unit (30) are sealed fluid-tight by seals (3) in recesses (16, 26) in the connecting pieces (10, 20).

**Revendications**

1. Débitmètre à induction magnétique, comportant un boîtier en matière plastique résistant à la pression comprenant

    - une tubulure d'entrée (10),
    - une tubulure de sortie (20),
    - et entre elles une unité de mesure (30) comportant

    -- un canal de mesure (31) parcouru par le fluide de mesure et présentant une paroi de canal (32),
    -- deux pôles magnétiques (2) se faisant face sur le canal de mesure (31)
    -- et deux électrodes de mesure (1) se faisant face et orientées perpendiculairement aux pôles magnétiques (2) dans la paroi de canal (32),

dans lequel la paroi de canal (32) est réduite dans la zone des pôles magnétiques (2) dans une mesure encore admissible compte tenu de la pression interne maximale admissible pour la matière plastique choisie,
**caractérisé en ce que** :

    - une cage de renforcement intérieure, constituée d'au moins deux cloisons transversales intérieures (37) et d'au moins deux nervures longitudinales intérieures (38), stabilise la paroi de canal (32),
    - une cage de renforcement extérieure, constituée d'au moins deux premières nervures longitudinales extérieures (40), maintient et stabilise la cage de renforcement intérieure et relie l'unité de mesure (30) d'une manière résistante à la traction à la tubulure d'entrée (10) et à la tubulure de sortie (20).

2. Débitmètre selon la revendication 1, **caractérisé en ce que** :

    - le canal de mesure (31) possède une section transversale rectangulaire.

3. Débitmètre selon la revendication 1 ou 2, **caractérisé en ce que** :

    - les nervures longitudinales intérieures (38) possèdent dans la zone de la paroi de canal (32) réduite des évidements pour le montage des pôles magnétiques (2).

4. Débitmètre selon la revendication 1, 2 ou 3, **caractérisé en ce que** :

    - les nervures longitudinales intérieures (38) possèdent dans certaines zones d'autres évidements (39) pour le montage d'autres composants et/ou pour l'ancrage de masses de scellement isolantes.

5. Débitmètre selon l'une des revendications 1 à 4, **caractérisé en ce que** :

- les cloisons transversales intérieures (37) sont positionnées directement devant et derrière la paroi de canal (32) réduite.

6. Débitmètre selon l'une des revendications 1 à 5, **caractérisé en ce que** :

- la cage de renforcement extérieure comprend également au moins deux cloisons transversales extérieures (42).

7. Débitmètre selon l'une des revendications 1 à 6, **caractérisé en ce que** :

- la cage de renforcement extérieure comprend également au moins deux deuxièmes nervures longitudinales extérieures (41) orientées perpendiculairement aux premières nervures longitudinales extérieures (40).

8. Débitmètre selon l'une des revendications 1 à 7, **caractérisé en ce que** :

- des nervures de renforcement (14, 24) en forme de coin introduisent le flux de force des premières et/ou deuxièmes nervures longitudinales extérieures (40, 41) dans la tubulure d'entrée (10) et la tubulure de sortie (20).

9. Débitmètre selon l'une des revendications 1 à 8, **caractérisé en ce que** :

- la dilatation longitudinale relative de l'unité de mesure (30) renforcée par une cage de renforcement intérieure et extérieure, déclenchée par une traction sur la tubulure d'entrée (10) et la tubulure de sortie (20), n'est pas supérieure à la dilatation longitudinale relative des tubulures (10, 20) elles-mêmes.

10. Débitmètre selon l'une des revendications 1 à 9, **caractérisé en ce que** :

- l'unité de mesure (30) est recouverte extérieurement d'un revêtement.

11. Débitmètre selon l'une des revendications 1 à 10, **caractérisé en ce que** :

- un blindage électrique et/ou magnétique entoure l'unité de mesure (30),
- le blindage est relié mécaniquement aux tubulures (10, 20) ou aux cloisons transversales extérieures (42).

12. Débitmètre selon l'une des revendications 1 à 11, **caractérisé en ce que** :

- les pôles magnétiques (2) sont intégrés dans la paroi de canal (32).

13. Débitmètre selon l'une des revendications 1 à 12, **caractérisé en ce que** :

- le boîtier est constitué d'une matière plastique renforcée, de préférence d'une matière thermoplastique renforcée par des fibres.

14. Débitmètre selon l'une des revendications 1 à 13, **caractérisé en ce que** :

- le boîtier est constitué de deux parties individuelles fabriquées séparément (10, 20, 30 ; 50),
- l'unité de mesure (30) possède un évidement (50') pour un module séparé (50) pouvant de préférence être inséré à la manière d'un ascenseur,
- le module (50) comprend au moins les cloisons transversales intérieures (37), le canal de mesure, les électrodes (1) et les pôles magnétiques (2).

15. Débitmètre selon l'une des revendications 1 à 13, **caractérisé en ce que** :

- le boîtier est constitué de trois parties individuelles (10, 20, 30) fabriquées séparément qui sont reliées entre elles de manière résistante à la traction,
- les extrémités de l'unité de mesure (30) sont rendues étanches au fluide au moyen de joints (3) dans des évidements (16, 26) des tubulures (10, 20).

*Fig.1*

*Fig.2*

*Fig.3*

*Fig.4*

**IN DER BESCHREIBUNG AUFGEFÜHRTE DOKUMENTE**

**In der Beschreibung aufgeführte Patentdokumente**

- EP 1616152 B1
- US 6626048 B1

- DE 102007004826 A1